# EUROPÄISCHE PATENTSCHRIFT

(11) **EP 0 916 908 B1**
(45) Veröffentlichungstag und Bekanntmachung des Hinweises auf die Patenterteilung: **07.04.2004**
(21) Anmeldenummer: 98120956.2
(22) Anmeldetag: 05.11.1998
(51) Int. Cl.: F24H 3/06

(54) **Heizgerät mit in den Wärmeübertrager integrierten Abgasauslassstutzen**
Heater with in the heat exchanger integrated exhaust
Réchauffeur avec échappement intégré dans l'échangeur de chaleur

(30) Priorität: 11.11.1997 DE 19749821
(43) Veröffentlichungstag der Anmeldung: 19.05.1999
(73) Patentinhaber: WEBASTO THERMOSYSTEME GmbH, D-82131 Stockdorf (DE)
(72) Erfinder: Habijanec, Stephan, 82152 Krailling (DE); Hellwig, Maximilian, 82131 Gauting (DE)
(74) Vertreter: Wiese, Gerhard

(56) Entgegenhaltungen:
- DE-A- 3 341 490
- DE-A- 19 613 760
- DE-U- 9 216 765
- US-A- 4 433 645
- PATENT ABSTRACTS OF JAPAN vol. 007, no. 037 (M-193), 15. Februar 1983 (1983-02-15) & JP 57 188959 A (MATSUSHITA DENKI SANGYO KK), 20. November 1982 (1982-11-20)

## Beschreibung

Die Erfindung betrifft ein Heizgerät, insbesondere ein Fahrzeugzusatzheizgerät, mit einem Brenner in einer Brennkammer, die von einem allgemein topfförmigen Druckguß-Wärmeübertrager umgeben ist, der ein Innen- und Außenteil und zwischen diesen einen von einem Wärmeträger durchströmten Zwischenraum aufweist, wobei aus der Brennkammer austretende Verbrennungsgase über einen Abgasauslaßstutzen ausgetragen werden.

Derartige Heizgeräte sind beispielsweise aus der DE 38 39 244 C2 und DE-A-196 13 760 bekannt. Bei diesen bekannten Heizgeräten ist der Abgasauslaßstutzen wie bei sämtlichen Heizgeräten mit Druckguß-Wärmeübertrager an einem Brennerkopf vorgesehen, der an den Wärmetauscher angeflanscht ist. Der Brennerkopf stellt ein zusätzliches Bauteil des Heizgeräts dar, um Abgas zu sammeln und auszutragen. Da der Brennerkopf nicht vom Wärmeträger durchströmt ist, kann im gesamten Bereich des Brennerkopfs, der etwa ein Drittel des Volumens des Heizgeräts ausmacht, den heißen Abgasen keine Wärme entzogen werden.

Bei Heizgeräten, etwa Fahrzeugzusatzheizgeräten, bei welchen der Wärmeübertrager aus Stahl besteht, ist es bekannt, den Abgasauslaßstutzen den Wärmeübertrager durchsetzend ohne zusätzlichen Brennerkopf vorzusehen. Eine derartige Konstruktion wurde im Fall von Wärmeübertragern aus Druckguß bislang nicht in Betracht gezogen, da die damit verbundenen Abdichtprobleme als unüberwindlich erachtet wurden.

Angesichts dieses Standes der Technik besteht die Aufgabe der vorliegenden Erfindung darin, ein Heizgerät der im Oberbegriff des Anspruchs 1 genannten Art zu schaffen, das eine optimale Wärmeübertragung auch im Bereich des Abgasauslaßstutzen gewährleistet.

Gelöst wird diese Aufgabe durch die Merkmale des Anspruchs 1. Vorteilhafte Weiterbildungen der Erfindung sind in den Unteransprüchen genannt.

Demnach sieht die Erfindung eine spezielle Ausgestaltung des Wärmeübertragers derart vor, daß der Abgasauslaßstutzen ohne zusätzlichen Brennerkopf in den Wärmeübertrager, der als Druckgußteil gebildet ist, integrierbar ist, wobei der vom Wärmeträger durchströmte Zwischenraum sich bis in den Bereich des Abgasauslaßstutzens erstreckt. Erzielt wird dies im einzelnen durch Trennen einer einstückigen topfartigen doppelwandigen Wärmeübertragerstruktur im Bereich des Außenteils bzw. äußeren Topfteils mit Abstand unterhalb des bodenfemen Wärmeübertragerrands und durch Verbinden der aufgetrennten Teile durch ein Dichtmittel an dieser Stelle, wobei besagter Abstand so groß gewählt ist, daß in diesem Wärmeübertragerbereich ein Abgasauslaßstutzen eingesetzt werden kann, der bevorzugt Bestandteil des innenliegenden Wärmeübertragerteils ist und durch den Wärmeträgermantel nach außen geführt ist.

Vorteilhafterweise wird eine Dichtstruktur gewählt, die einen O-Ring umfaßt, der im axialen Dichtsitz im Trennbereich der Wärmeübertragerstruktur zwischen Innen- und Außenteil angeordnet ist.

Die Erfindung gewährleistet dadurch eine direkte Durchführung von Abgasen durch den Wärmeträgermantel, wodurch der beim Stand der Technik bei Druckguß-Wärmeübertragern bislang unabdingbare Brennerkopf einschließlich seiner Abdichtung zum Wärmeübertrager entfallen kann. Außerdem wird sowohl der Abgassammelraum wie auch der Abgasauslaßstutzen durch die erfindungsgemäße Anordnung vom Wärmeträger durchströmt, wodurch der Wirkungsgrad des Wärmeübertragers im Vergleich zu einer Konstruktion mit Brennerkopf deutlich verbessert ist. Dadurch ist insbesondere vorteilhafterweise eine Verkürzung der Wärmeübertragerlänge und somit eine Reduzierung der Größe des gesamten Heizgeräts möglich.

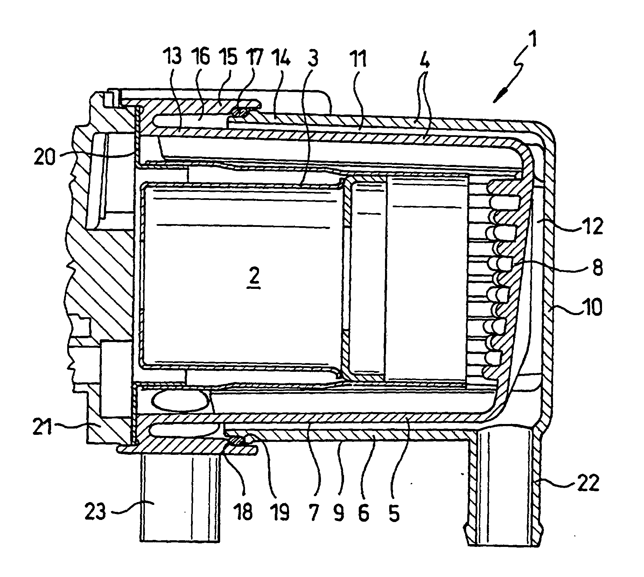

Nachfolgend wird die Erfindung anhand der Zeichnung beispielhaft näher erläutert; die einzige Figur der Zeichnung zeigt einen Längsschnitt durch den Brennkammer/Wärmeübertragerteil eines Heizgeräts.

Das Heizgerät, bei dem es sich insbesondere um ein Fahrzeugzusatzheizgerät mit flüssigem Wärmetrager handeln kann, d.h. um ein Wasserheizgerät, ist in der Figur insgesamt mit der Bezugsziffer 1 bezeichnet. Dieses Heizgerät besteht in an sich bekannter Weise aus einem nicht dargestellten Brenner, der in eine Brennkammer 2 ragt, die von einem Brennrohr 3 gebildet ist. Die Brennkammer 2 ist koaxial von einem Wärmeübertrager 4 umgeben, der aus zwei Druckgußteilen besteht, nämlich einem Innenteil 5 und einem Außenteil 6. Das Innenteil 5 und das Außenteil 6 sind jeweils allgemein topfförmig gebildet, wobei der innere Topf in den äußeren Topf eingesetzt ist. Im einzelnen weist das Innenteil 5 eine bevorzugt zylindrische Umfangswandung 7 und einen Boden 8 auf, und in ähnlicher Weise weist das Außenteil 6 eine Umfangswandung 9 und einen Boden 10 auf. Der Boden 8 des Innenteils 5 ist auf seiner Innenseite strukturiert. Diese Strukturierung in Form von vorspringenden Stiften oder Rippen ist aufgrund der relativ einfachen Form des Innenteils 5 leicht entformbar.

Das Innenteil 5 ist in dem Außenteil 6 unter Belassung eines Zwischenraums 11 zwischen den Umfangswandungen 7 und 9 und eines Zwischenraums 12 zwischen den Böden 8 und 10 angeordnet. Außerdem ist das Außenteil 6 axial kürzer gebildet als das Innenteil 5, welches mit seinem dem Boden 8 gegenüberliegenden Rand 13 über den Rand 14 des Außenteils 6 vorsteht. Die Ränder 13 und 14 werden vorliegend auch als Topfrand bezeichnet, da die Innen- und Außenteile 5, 6 topfförmig gebildet sind.

Erfindungsgemäß ist am Rand 13 des Innenteils 5 ein Ring 15 angeformt, der in Richtung auf den Boden 8 des Innenteils 5 vorspringt und einen größeren Innendurchmesser als das Innenteil 5 im Bereich seines Rands 13 in etwa entsprechend dem Außendurchmesser des Außenteils 6 im Bereich dessen Rands 14 aufweist. Die axiale Erstreckungslänge des Rings 15 ist so gewählt, daß dieser mit seinem zu den Böden 8, 10 weisenden Ende den Rand 14 des Außenteils 6 umgreift, und zwar in dichtender Weise, wie nachfolgend im einzelnen erläutert. Aufgrund dieser Struktur verbleibt zwischen dem Rand 13 des Innenteils 5 und dem Ring 15 ein Zwischenraum 16, der eine Fortsetzung des Zwischenraums 11 darstellt und sich bis zu dem Anbindungsbereich des Rings 15 an den Rand 13 des Innenteils 5 erstreckt.

Zur Abdichtung des Rings 15 gegenüber dem Rand 14 des Außenteils 6 dient ein O-Ring 17, der zwischen der Innenseite des Rands 15 an dessen bodenseitigem Ende und der Außenseite des Außenteils 6 in dessen Randbereich vorgesehen ist. Zur axialen Führung und zur Gewährleistung eines radialen Dichtsitzes ist die Innenseite des Rings 15 im Bereich seines bodenseitigen Endes umlaufend ausgenommen und in ähnlicher Weise ist die Außenseite des äußersten Endes des Rands 14 des Außenteils 6 über seinen gesamten Umfang ausgenommen. Hierdurch ist am Ring 15 eine ringförmige Stufe bzw. Schulter 18 und am Rand 14 des Außenteils 16 eine ringförmige Stufe bzw. Schulter 19 gebildet, und diese Schultern sind in axialer Richtung voneinander beabstandet, um den O-Ring 17 im radialen Dichtsitz aufnehmen zu können.

Bei der in der Figur gezeigten Ausführungsform erstreckt sich der Ring 15 axial über den äußersten Bereich des Rands 13 des Innenteils 5 hinaus und und dient zur Lagepositionierung als axiale Auflagefläche für die Halterungsstruktur 20 des Brennrohrs 3 und bildet außerdem eine Aufnahme für das nur ausschnittweise dargestellte Lüftergehäuse 21.

Die Zwischenräume 11, 12 und 16 stehen, wie aus der Figur deutlich hervorgeht, miteinander in Verbindung und bilden einen gemeinsamen Zwischenraum, der von einem Wärmeträgermedium, beispielsweise Wasser durchflossen ist, das in diesen gemeinsamen Zwischenraum über einen Zulaufstutzen 22 zugeführt und über einen nicht dargestellten Ablaufstutzen ausgeleitet wird. Der Zulaufstutzen 22 mündet bei der dargestellten Ausführungsform in den Bodenbereich des Wärmeübertragers 4, d.h. in den Zwischenraum 12.

Bei der Verbrennung aus der Brennkammer 2 austretende Verbrennungsgase werden im Bereich des Bodens 8 der Innenkammer innerhalb von dieser in den Bereich der Umfangswandung 7 umgelenkt und geben ihre Wärme an den im Zwischenraum 11, 12, 16 strömenden Wärmeträger ab, und die restlichen Gase werden als Abgase über einen Abgasauslaßstutzen 23 ausgetragen.

Erfindungsgemäß ist der Abgasauslaßstutzen 23 im Gegensatz zum Stand der Technik betreffend Druckguß-Wärmeübertrager nicht in einem gesonderten Brennerkopf gebildet, sondern in den Wärmeübertrager 4 im Bereich der Topfränder 13, 14 des Innen- und Außenteils 5, 6 integriert. Demnach durchsetzt der Abgasauslaßstutzen 23 von außen nach innen den Ring 15, den Zwischenraum 12 im Ringbereich und das Wärmeübertrager-Innenteil 5. Durch die Anordnung des Abgasauslasses 23 direkt am Wärmeübertrager 4 wird eine besonders kompakte Bauform des Wärmeübertragers und damit des Heizgeräts 1 erzielt, da ein Brennerkopf, der bislang als Träger des Abgasauslasses zum Einsatz kam, entfallen kann. Außerdem wird die Wärmeübertragungslänge vorteilhaft verlängert, ohne die Baulänge des Heizgeräts zu erhöhen. Diese kann im Gegenteil bei einer vorgegebenen Heizleistung verringert werden.

### Bezugszeichenliste

- 1: Heizgerät
- 2: Brennkammer
- 3: Brennrohr
- 4: Wärmeübertrager
- 5: Innenteil
- 6: Außenteil
- 7: Umfangswandung
- 8: Boden
- 9: Umfangswandung
- 10: Boden
- 11: Zwischenraum
- 12: Zwischenraum
- 13: Rand
- 14: Rand
- 15: Ring
- 16: Zwischenraum
- 17: O-Ring
- 18: Schulter
- 19: Schulter
- 20: Halterungsstruktur
- 21: Lüftergehäuse
- 22: Zulaufstutzen
- 23: Abgasauslaßstutzen

## Patentansprüche

1. Heizgerät, insbesondere Fahrzeugzusatzheizgerät, mit einem Brenner in einer Brennkammer (2), die von einem allgemein topfförmigen Druckguß-Wärmeübertrager (4) umgeben ist, der ein Innen- und ein Außenteil (5, 6) und zwischen diesen einen von einem Wärmeträger durchströmten Zwischenraum (11, 12) aufweist, wobei aus der Brennkammer (2) austretende Verbrennungsgase über einen Abgasauslaßstutzen (23) ausgetragen werden, **dadurch gekennzeichnet, daß** außen am Topfrand des Wärmeübertrager-Innenteils (5) von dessen Außenseite beabstandet ein zum Topfboden (8, 10) vorspringender Ring (15) vorgesehen ist, der am Topfrand des Wärmeübertrager-Außenteils (6) dicht anliegend den Zwischenraum (11, 12) bis zum Topfrandbereich des Innenteils (5) fortsetzt (16), und daß der Abgasauslaßstutzen (23) den Ring (15), den Zwischenraum und das Innenteil (5) durchsetzt.

2. Heizgerät nach Anspruch 1, **dadurch gekennzeichnet, daß** der Ring (15) am Topfrandbereich des Wärmeübertrager-Innenteils (5) angeformt ist.

3. Heizgerät nach Anspruch 1 oder 2, **dadurch gekennzeichnet, daß** ein O-Dichtring (17) zwischen einer außen am Topfrand des Wärmeübertrager-Außenteils (6) radial auswärts vorspringenden Schulter (19) und einer innen am topfrandseitigen Ringrand einwärts vorspringenden Schulter (18) in axialem Dichtsitz angeordnet ist.

4. Heizgerät nach Anspruch 1, 2 oder 3, **dadurch gekennzeichnet, daß** der Ring (15) über den Topfrand des Wärmeübertrager-Innenteils (5) vorspringt.

## Claims

1. Heater, in particular an additional vehicle heater, having a burner in a combustion chamber (2) surrounded by a generally pot-shaped die-cast heat exchanger (4) which has an inner and an outer part (5, 6) and between which an intermediate space (11, 12) is formed through which a heat exchange medium flows, combustion gases emerging from the combustion chamber (2) being discharged via an exhaust gas outlet connection (23), **characterized in that** a ring (15) is provided on the outside on the pot edge of the heat exchanger inner part (5), spaced apart from the outside of the latter and protruding towards the base (8, 10) of the pot, which ring, resting on the pot edge of the heat exchanger outer part (6) in a sealing manner, continues (16) the intermediate space (11, 12) as far as the pot edge region of the inner part (5), and **in that** the exhaust gas outlet connection (23) passes through the ring (15), the intermediate space and the inner part (5).

2. Heater according to Claim 1, **characterized in that** the ring (15) is integrally moulded on in the pot edge region of the heat exchanger inner part (5).

3. Heater according to Claim 1 or 2, **characterized in that** an O-ring seal (17) is arranged with an axial sealing seat between a shoulder (19) which protrudes radially outwards on the outside at the pot edge of the heat exchanger outer part (6) and a shoulder (18) which protrudes inwards on the inside at the edge of the ring on the pot edge side.

4. Heater according to Claim 1, 2 or 3, **characterized in that** the ring (15) protrudes beyond the pot edge of the heat exchanger inner part (5).

## Revendications

1. Réchauffeur, notamment radiateur additionnel de véhicule comportant un brûleur dans une chambre de combustion (2) entourée par un échangeur de chaleur (4) de configuration générale en marmite, venu de coulée sous pression et comprenant des parties intérieure et extérieure (5, 6) et, entre ces dernières, un espace intercalaire (11, 12) parcouru par un agent caloporteur, sachant que des gaz de combustion sortant de la chambre de combustion (2) sont évacués par l'intermédiaire d'un raccord (23) de sortie des gaz d'échappement, **caractérisé par le fait qu'**une bague (15), prévue extérieurement sur le rebord de marmite de la partie intérieure (5) de l'échangeur de chaleur, à distance de la face extérieure de ladite partie et en saillie vers le fond (8, 10) de la marmite, prolonge (16) l'espace intercalaire (11, 12) jusqu'à la région du rebord de marmite de la partie intérieure (5), en étant appliquée hermétiquement contre le rebord de marmite de la partie extérieure (6) de l'échangeur de chaleur ; et **par le fait que** le raccord (23) de sortie des gaz d'échappement traverse ladite bague (15), ledit espace intercalaire et ladite partie intérieure (5).

2. Réchauffeur selon la revendication 1, **caractérisé par le fait que** la bague (15) fait corps avec la région du rebord de marmite de la partie intérieure (5) de l'échangeur de chaleur.

3. Réchauffeur selon la revendication 1 ou 2, **caractérisé par le fait qu'**un joint torique (17) est interposé, avec assise axiale étanche, entre un épaulement (19) faisant radialement saillie vers l'extérieur sur le rebord de marmite de la partie extérieure (6) de l'échangeur de chaleur, et un épaulement (18) faisant saillie vers l'intérieur sur le bord de la bague situé du côté du rebord de marmite.

4. Réchauffeur selon la revendication 1, 2 ou 3, **caractérisé par le fait que** la bague (15) fait saillie au-delà du rebord de marmite de la partie intérieure (5) de l'échangeur de chaleur.
